Europäisches Patentamt

European Patent Office

Office européen des brevets

(19)

(11) Publication number: **0 406 841 A1**

# EUROPEAN PATENT APPLICATION

(12)

(21) Application number: 90112789.4

(22) Date of filing: 04.07.90

(51) Int. Cl.⁵: **G07F 7/08**

(30) Priority: 04.07.89 JP 172429/89

(43) Date of publication of application:
**09.01.91 Bulletin 91/02**

(84) Designated Contracting States:
**DE FR GB**

(71) Applicant: **SEIKO INSTRUMENTS INC.**
**31-1, Kameido 6-chome Koto-ku**
**Tokyo 136(JP)**

Applicant: **INTERNATIONAL CARD SYSTEM INC.**
**1-17, Kandasakumacho, Chiyoda-ku**
**Tokyo(JP)**

(72) Inventor: **Nonaka, Kei**
**c/o Seiko Instruments Inc., 31-1, Kameido**
**6-chome**
**Koto-ku, Tokyo(JP)**
Inventor: **Ishida, Takashi**
**c/o Seiko Instruments Inc., 31-1, Kameido**
**6-chome**
**Koto-ku, Tokyo(JP)**

Inventor: **Yoshida, Hitoshi**
**c/o Seiko Instruments Inc., 31-1, Kameido**
**6-chome**
**Koto-ku, Tokyo(JP)**
Inventor: **Yoda, Kazuhiro**
**c/o Seiko Instruments Inc., 31-1, Kameido**
**6-chome**
**Koto-ku, Tokyo(JP)**
Inventor: **Onda, Hiroyuki**
**c/o Seiko Instruments Inc., 31-1, Kameido**
**6-chome**
**Koto-ku, Tokyo(JP)**
Inventor: **Arai, Yoshio**
**c/o Seiko Instruments Inc., 31-1, Kameido**
**6-chome**
**Koto-ku, Tokyo(JP)**
Inventor: **Fukase, Yutaka**
**c/o Seiko Instruments Inc., 31-1, Kameido**
**6-chome**
**Koto-ku, Tokyo(JP)**

(74) Representative: **Fleuchaus, Leo, Dipl.-Ing. et al**
**Melchiorstrasse 42**
**D-8000 München 71(DE)**

(54) A system for issuing and accounting prepaid card.

(57) A system for issuing and accounting prepaid cards has a central unit (2) having accessible data base (1) stored personal account data, a group of card-issuing units (3) for issuing prepaid cards (4) with values with which goods and services can be purchased up to maximum sums based on personal account data, and a group of accounting units (6) for inputting the maximum allowable sum of the prepaid card (4) and the sum of goods and services really purchased, for renewing the maximum allowable sums based upon the differences between the sums of purchasing and the maximum sum, and for printing the renewed maximum allowable sums on the prepaid cards (4). Thereby, the system can issue the prepaid cards (4) and account without the need of transferring the cash. Furthermore, the system can indicate the data of lately renewed balance visually and in time series, and enables the customer to make sure the details.

## FIG. 1(A)

## A SYSTEM FOR ISSUING AND ACCOUNTING PREPAID CARD

## BACKGROUND OF THE INVENTION

### 1. Field of the invention

The present invention relates to a so-called bank POS system. More specifically, the invention relates to a system for issuing and accounting prepaid cards that enables the purchasing of goods and services and approval thereof to be effected using the prepaid card as a medium without using cash.

### 2. Description of the Prior Art

Systems of transactions have heretofore been known using the prepaid card (e.g., telephone card) that has values and functions with which goods and services can be repetitively purched up to a predetermined maximum sum.

Conventional systems involved inconvenience in that when the prepaid card was to be purchased, it was a rule to pay cash that met the maximum sum thereof.

Further, since the transactions were made using the prepaid card of a magnetic recording type as the medium, the customer was not allowed to directly and visually confirm the recorded contents such as the balance or the details of payments unless a reproducing apparatus was used.

Moreover, since the prepaid card was not provided with an identification mark of a proprietor, it was not possible to effectively prevent abuse, embezzlement or illicit use.

## SUMMARY OF THE INVENTION

An object of the present invention is to provide a system which makes it possible to effect business transactions using a prepaid card as a medium without at all using cash.

Another object of the present invention is to provide a system which is capable of issuing a prepaid card without the need of receiving cash by utilizing the data base in which are accumulated personal account data of a bank.

A further object of the present invention is to provide a system which makes it possible to effect business transactions using, as a medium, a thermal printing prepaid card that visually indicates the recorded contents.

Still further object of the present invention is to provide a system which makes it possible to effect transactions using, as a medium, a prepaid card which displays a personal identification.

In order to achieve the above-described objects, the present invention deals with the system for issuing and accounting prepaid cards having a central unit that has accessible data base in which personal account data are accumulated, a group of card-issuing units that include terminals connected to the data base through communication circuits and that issue prepaid cards with values with which goods and services can be purchased up to maximum sums based on personal account data to which access is made via the terminals, and a group of accounting units which receive the data of sums of goods and services really purchased as well as the data of the prepaid cards, which renew maximum sums based upon the differences between the sums of purchasing and the maximum sums, and which indicate the renewed maximum sums on the prepaid cards.

According to the present invention, preferably, each card-issuing unit is so constituted as to issue thermal printing prepaid cards on which necessary recorded data are printed and visually displayed.

According to the present invention, more preferably, each card-issuing unit is so constituted as to display a personal identification consisting of a photograph of face on the prepaid card.

## BRIEF DESCRIPTION OF THE DRAWINGS

Fig. 1(A) is a block diagram illustrating the whole constitution of a system for issuing and accounting prepaid cards according to the present invention;

Fig. 1(B) is a block diagram showing the system according to another embodiment of the present invention;

Fig. 2(A) is a plan view of a prepaid card that is issued;

Fig.2(B) is a plan view of the prepaid card that is accounted;

Fig. 3 is a perspective view showing the appearance of a card-issuing unit of Fig. 1(A);

Fig. 4(A) is a section view of a card-issuing machine incorporated in the card-issuing unit of Fig. 3;

Fig. 4(B) is a block diagram illustrating the circuitry of the card-issuing unit;

Fig. 5(A) is a flow chart for explaining the operation of the card-issuing unit;

Fig. 5(B) is a flow chart illustrating the card re-issue processing by the card-issuing unit;

Fig. 6 is a section view of the accounting unit shown in Fig. 1(A);

Fig. 7(A) is a section view of an accounting machine incorporated in the accounting unit of Fig. 6;

Fig. 7(B) is a block diagram showing the circuitry of the accounting unit of Fig. 7(B); and

Fig. 8 is a flow chart for explaining the operation of the accounting unit.

## DETAILED DESCRIPTION OF THE INVENTION

Hereinafter, embodiments of the present invention will be explained in conjunction with the drawings. For easy explanation, the whole constitution of a system of the novel invention, constitution of a prepaid card, structure and operation of a card-issuing unit, will be described in the order mentioned.

### 1. Whole constitution of the system.

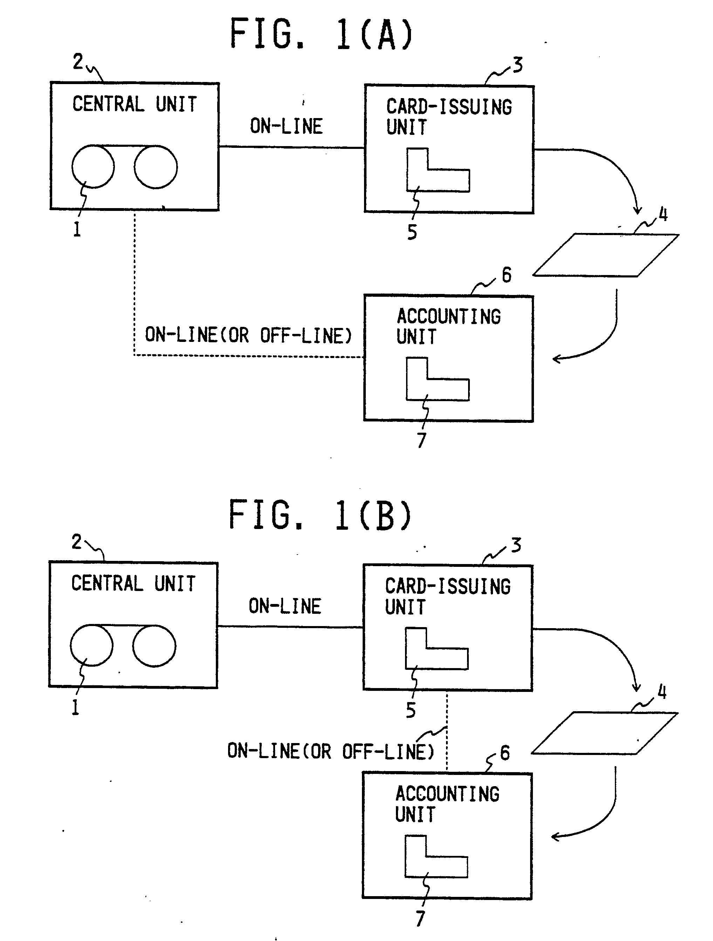

As shown in Fig. 1(A), the system includes a central unit 2 having a data base 1 in which personal bank account data are accumulated and to which access can be made at any time. Further, each of card-issuing units 3 is coupled to the data base 1 through communication circuits, i.e., on-line.

Each card-issuing unit 3 functions as a data base terminal. Upon the input of personal identification data, the card-issuing unit 3 makes access to the data base 1 of the central unit 2 and reads a personal account data corresponding to the personal identification data out. When the data of a desired maximum allowable sum are input, a card-issuing machine 5 issues a prepaid card 4 on which the maximum allowable sum is printed under the condition that the sum is within the sum of deposit indicated by the personal account data.

The card-issuing unit 3 prints on the prepaid card 4 an ID mark such as a photograph of face with which an individual person can be visually identified based upon the input personal identification data.

An accounting unit 6 is installed in the places where goods or services are to be offered. The accounting unit 6 is input the data of sum of goods or services really purchased at that place and, further, receives the prepaid card 4. An accounting machine 7 stored in the accounting unit 6 optically reads the data of the present maximum sum from the prepaid card 4, calculates a difference from the input sum of purchasing to find a balance, renews the maximum sum, prints a new maximum sum on the prepaid card 4 and releases it. The accounting unit 6 is connected to the central unit 2 on-line or off-line, and effects the settlement related to the amount sold.

Fig. 1(B) is a block diagram illustrating a system for issuing and accounting prepaid cards according to another embodiment of the present invention. In this embodiment, the card-issuing unit 3 and the accounting unit 6 are connected on-line or off-line, and the accounting unit 6 exchanges data with the central unit 2 via the card-issuing unit 3, and executes the settlement processing and the like. In this case, the data flow in one way from the accounting unit 6 to the central unit 2 via the card-issuing unit 3. Unlike the case of Fig. 1(A), therefore, there is no need of coupling the accounting unit 6 and the central unit 2 together on-line or off-line.

### 2. Constitution of the prepaid card.

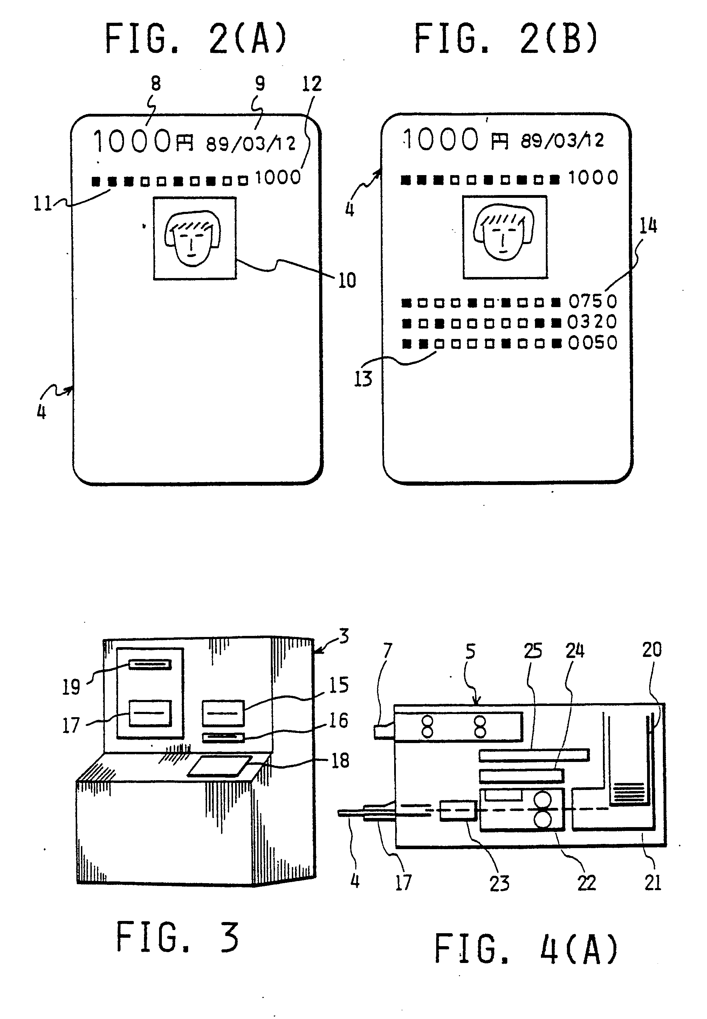

Fig. 2(A) shows a prepaid card 4 produced by the card-issuing unit 3. On the front surface of the card 4 are printed and indicated the data of a maximum allowable sum 8, the data of the date of issuance 9, and an ID mark 10.

The data of a photograph of face that constitute the ID mark 10 are sent from the data base 1 as part of personal account data.

In addition to the case of being sent from the data base 1, the data of a photograph of face may be printed and indicated on the prepaid card by providing the card-issuing unit 3 with a video camera and a video monitor, and taking the image of face of a person who purchases the prepaid card followed by the processing thereof.

Further, data of the initial maximum sum 11 are printed as a binary decoded dot pattern so as to be optically read out correctly by the accounting machine 7. Data of the initial maximum sum 12 are printed as ordinary Arabic numerals so as to be confirmed directly by a customer in the wake of the data of the initial maximum sum 11.

Fig. 2(B) shows the prepaid card 4 that is repetitively accounted by the accounting unit 6.

The data of renewed maximum sum, i.e., balance data 13 that are renewed every time when the accounting is effected and being indicated as a binary decoded dot pattern, are printed on the surface of the prepaid card 4. There are further printed balance data 14 that are encoded and indicated in Arabic numerals. Thus, the same data are indicated by using both a dot pattern and Arabic numerals, so as to be recognized by both the machine and the customer.

The prepaid card 4 can be printed data by the thermosensible printing method. That is, the base sheet is composed of, for example, a PET, a paper or a vinyl chloride sheet, and a thermosensible color developing agent is applied to one surface or both surfaces of the base sheet. The surfaces are further coated with, for example, a silicon-type polymer compound. The size is the same as that of an ordinary cash card.

Space of the card can be effectively utilized by printing the photograph of face on one surface of the prepaid card 4 and printing the codes of sum and indication of sum on the other surface.

In this case, different kinds of the thermosensible materials should be used on the surfaces to fit the purpose such as using a thermosensible material of a high resolution on one surface for printing the photograph and using a thermosensible material having high durability on the other surface.

### 3. Structure and operation of the card-issuing unit.

Fig. 3 shows an appearance of the card-issuing unit 3 which consists of the combination of a cash card processing portion and a card-issuing machine. The cash card processing unit is connected on-line to the data base 1 in which personal account data are accumulated, and processes the deposited cash card. The card-issuing unit 3 has a cash card inlet 15, a detailed list outlet 16, a prepaid card outlet 17, an input operation portion 18, and a read port 19 for transferring the sum left in the old prepaid card onto a new prepaid card. The cash card is utilized for making access to the data base 1 and reading out the personal account data, and is inserted in the cash card inlet 15. The input operation portion 18 is manually operated to input the data of a predetermined maximum allowable sum. The detailed list recording balance of deposit which the input maximum allowable sum is deducted from the sum of deposit indicated by the personal account data is released from the detailed list outlet 16. The prepaid card on which is printed the input maximum allowable sum is released from the prepaid card outlet 17. When there is a small amount of balance on the old prepaid card, the old prepaid card is inserted in the read port 19 to read out the balance so that it is transferred to a new prepaid card that is to be issued.

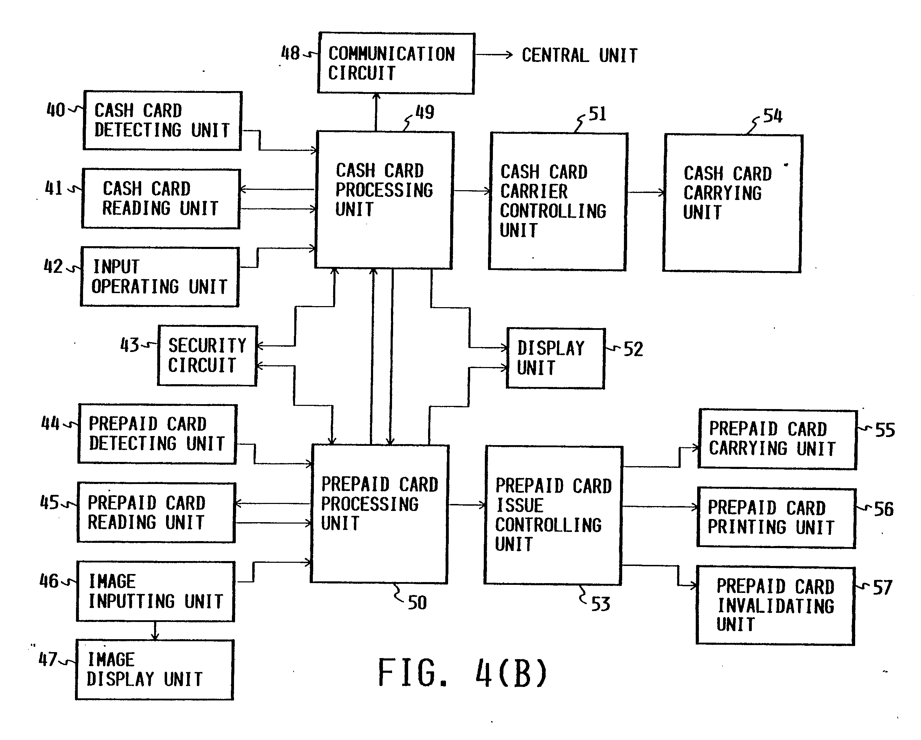

Fig. 4(A) is a sectional view of the card-issuing machine 5 stored in the card-issuing unit 3 shown in Fig. 3. The card-issuing machine 5 has a card stocker 20 for stocking a maximum of 1000 pieces of prepaid cards which have not been printed. A carrier machine 21 is provided under the card stocker 20 and supplies the card one piece by one piece to a line reader/writer processing unit 22. The line reader/writer processing unit 22 contains a line thermal head for printing predetermined items on a thermosensible prepaid card that is supplied by the carrier machine 21, and a line photosensor which confirms and detects any error in the items that are printed. A cutter 23 is arranged in front of the processing unit 22 to cut defective cards that bear erroneous printing or the like. The prepaid card 4 on which the items are printed exactly is released from the prepaid card outlet 17 and is thus issued. The card-issuing machine 5 has a security board 24 constructed in the form of a black box and a board 25 for application software for operating the card-issuing machine 5.

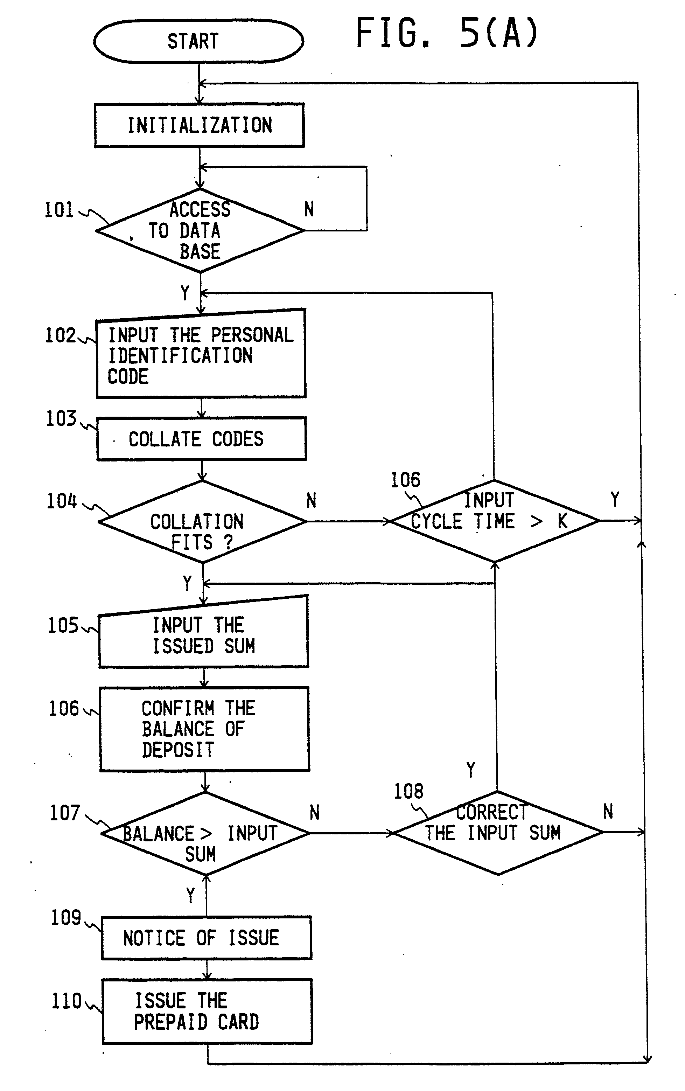

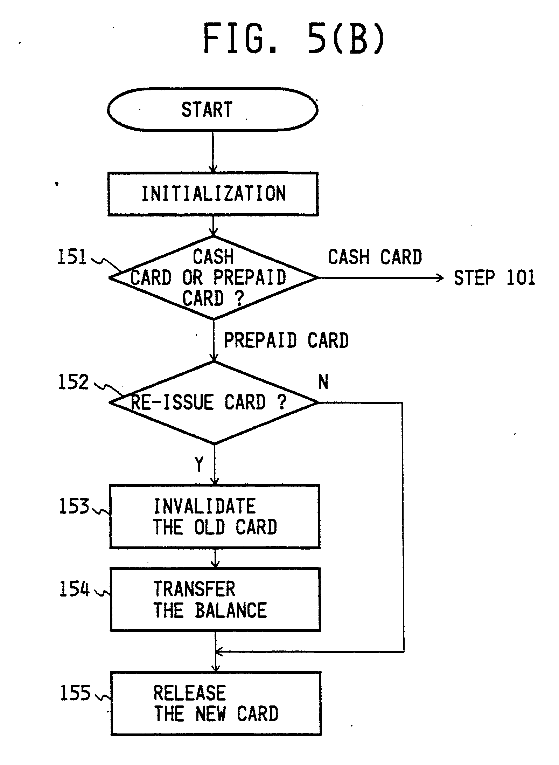

Operation of the card-issuing unit 3 will now be described in conjunction with a block diagram shown in Fig. 4(B) and a flow chart shown in Fig. 5-(A). When the card- issuing unit 3 is started, the data in the card-issuing unit 3 are cleared, the cash card being processed therein is detected, and the prepaid card being processed therein is invalidated. After the initialization, the cash card is inserted in the card-issuing unit 3, the insertion thereof is detected by cash card detecting unit 40, the information of the cash card is read by cash card reading unit 41, and a cash card processing unit 49 accesses to the personal account data of the data base 1 stored in the central unit 2 via a communication circuit 48 on-line (step 101).

Then, the personal identification code, for example, a private identification number assigned to the customer is input by an input operating unit 42 (step 102).

The cash card processing unit 49 checks the personal identification code input by the customer with that based on the data base 1 on-line (step 103).

When the customer is confirmed as a result of collation in a step 104, the program proceeds to a step 105. When the customer is not confirmed, the personal identification code is input repetitively in a step 106. When erroneous data are input repetitively more than a predetermined number of times, the processing is interrupted for maintaining safety and is initialized.

In a step 105, a predetermined maximum allowable sum, i.e., the issued sum on the prepaid card is input by the input operating unit 42. A step 106 compares the balance of deposit, which is indicated by the accessed personal account data, with the issued sum that is input. When it is confirmed in a step 107 that the issued sum that is input is not greater than the balance of deposit, the data stored in the data base 1 are renewed. Then, prepaid card carrying unit 55 and prepaid card printing unit 56 are controlled by prepaid card processing unit 50 and prepaid card issue controlling unit 53, and a prepaid card on which the issued sum is printed is issued (step 109).

In this case, the data of face taken by an image inputting unit 46 may be printed on the prepaid card.

Thereafter, the cash card is released to the outside by a cash card carrier controlling unit 51 and a cash card carrying unit 54.

When it is determined in a step 107 that the issued sum that is input exceeds the balance of deposit, the correction input operation is carried out in a step 108 to reduce the issued sum or the program is initialized.

Fig. 5(B) is a flow chart of the card-issuing unit for re-issuing the prepaid card. After the card-issuing unit is initialized, it is discriminated whether the deposited card in a step 151 is a cash card or a prepaid card based on the outputs of cash card detecting unit 40 and prepaid card detecting unit 44. When it is the cash card, the program jumps to the step 101 (Fig. 5(A)) to effect ordinary data base access processing.

When the deposited card is the prepaid card, the program proceeds to a step 152 where it is discriminated by prepaid card processing unit 50 whether the deposited prepaid card needs be re-issued on the basis of the data which is read out by prepaid card reading unit 45. The re-issue conditions are that the space for printing the sum of the card has been filled already and that there is a balance. When these conditions are not satisfied, the deposited card is released by prepaid card carrying unit 55.

When these conditions are satisfied, the deposited card is regarded to be an old card and is invalidated by prepaid card invalidating unit 57 in a step 153. The method of invalidation will be to cut the old card or to bring the balance of the old card into zero. In a next step 154, the balance of the old card is transferred by prepaid card printing unit 56 onto a new card that is to be issued, and the new card is released by prepaid card carrying unit 55 (step 155). In this case, the old card that is invalidated may be released, too.

When the old card that is invalidated is cut in the card-issuing unit, the old card is not released as a matter of course.

In the block diagram of Fig. 4(B), the security circuit 43 works to encipher the data for preventing unauthorized transactions, image display unit 47 works to confirm the image of face taken in by the image inputting unit 46, and display unit 52 works to help the operator promote and confirm the next operation.

## 4. Structure and operation of the accounting unit.

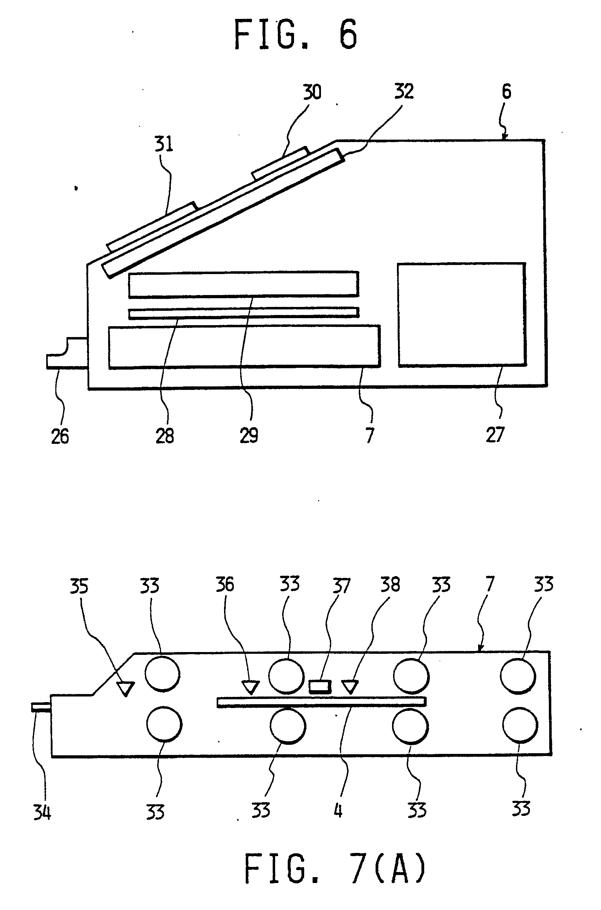

Fig. 6 shows the structure of the accounting unit in cross section. The accounting unit 6 contains an accounting machine 7 which reads the data recorded in a card inserted through the prepaid card inlet 26, and writes the renewed data. The accounting unit 6 is further provided with a power source circuit 27 for supplying electric power to the accounting machine 7. The accounting unit 6 is further provided with a first circuit 28 for driving the accounting machine 7, and a second circuit 29 for controlling the whole operation of the accounting unit 6. On the front part of the frame of the accounting unit 6 are arranged a liquid crystal display unit 30 for displaying predetermined data and instructions and a keyboard 31 for inputting prices of the goods really purchased and other data. It is also allowable to use in combination an ordinary cash register when the price data of purchased goods are to be input. On the back side of the liquid crystal display unit 30 and the keyboard 31 is arranged a circuit 32 that controls the inputs and outputs for these parts.

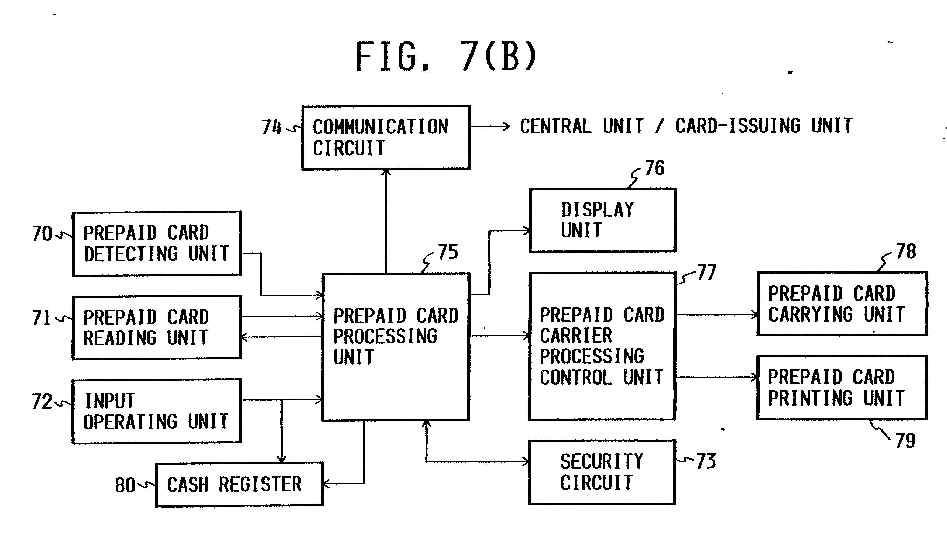

Fig. 7(A) shows in cross section the accounting machine 7 of Fig. 6. The accounting machine 7 has a plurality pairs of carrier rollers 33 for carrying, in the back and forth directions, the prepaid card 4 that is deposited from an opening 34 in front. As the card 4 moves rearwardly from the opening 34, the deposited card 4 is detected by a card detect sensor 35. In response to the detect signal, the accounting machine 7 performs the reading operation, and a first read sensor 36 reads the data of the present maximum allowable sum, i.e., reads the data of balance indicated on the card 4. The data of balance that are read are displayed on the display unit 30. As the card 4 is further sent backwardly, a thermal head 37 prints the data of renewed balance obtained by subtracting the data of price for purchasing a good (i.e., the data of sum paid) from the data of balance. Unless any error is detected by a second read sensor 38 in printing the data of renewed balance, the card 4 is sent back toward the front and is released from the opening 34. The accounting machine 7 is constituted by a so-called serial printer having a reading function.

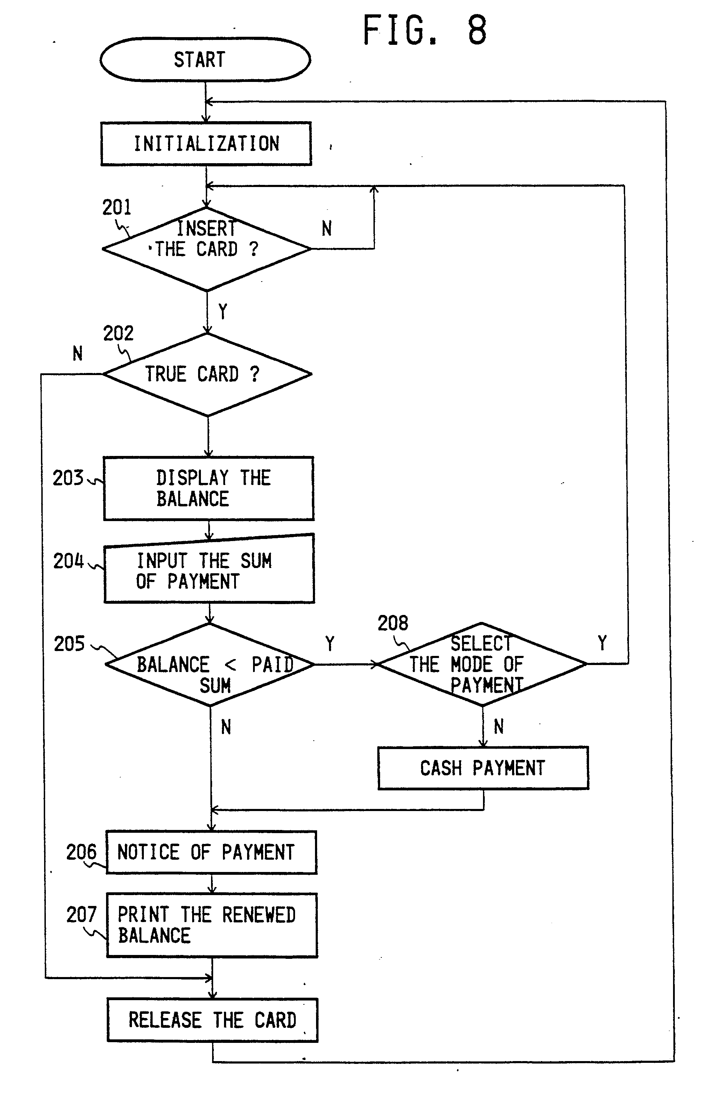

Finally, operation of the accounting unit will be described in conjunction with a block diagram of the accounting unit of Fig. 7(B) and a flow chart of Fig. 8. After the accounting unit 6 is initialized, prepaid card detecting unit 70 discriminates in a step 201 whether the card is inserted or not. In a step 202, prepaid card processing unit 75 discriminates whether the deposited card is a true one based on the data from prepaid card reading unit 71 and forged cards are removed. In order to prevent forgery, the prepaid cards may, for example, be of the type that are read by near infrared rays. Then in a step 203, the data of present balance are read by prepaid card reading unit 71 and are displayed on display unit 76.

In a step 204, the input operating unit 72 is operated to input the data of the sum of payment to the prepaid card processing unit 75. In a step 205, prepaid card processing unit 75 compares the read out data of balance with the input data of paid sum. When the sum that is paid does not exceed the balance, a notice of payment for settlement is sent in a step 206 to the central unit 2 on-line via the communication circuit 74. Then, prepaid card carrier processing control unit 77 actuates prepaid card carrying unit 78 and prepaid card printing unit 79 in a step 207 to record the data of a new balance on the card which is then released.

When it is discriminated in the step 205 that the sum of payment is in excess of the balance, the program proceeds to a step 208 where it is selected whether the difference there between is paid in cash or using a new prepaid card. When paid in cash, the processing is executed by the cash register 80.

Though not shown in the flow chart, when little blank is left on the card for recording data, an end mark is printed on the card by prepaid card printing unit 79 so as to urge to purchase a new card.

The aforementioned system for issuing and accounting the prepaid cards uses the prepaid cards of the thermosensible type to visibly indicate and print data such as balances and the like. According to the system of the present invention, however, any prepaid cards may be used recording media that basically enable the data to be written and read out. Depending upon the cases, therefore, there may be used the prepaid cards of the known magnetically recording type and the prepaid cards of the type based on both the magnetic recording and the thermosensible recording. When the magnetic recording system is employed, the magnetic heads are incorporated in the card detecting unit 40, 44 and 70 in the card-issuing machine and in the accounting machine.

According to the present invention as described in the foregoing, the system has great advantage which the prepaid card can be issued and accounted without the need of transferring the cash in comparison with the conventional counterparts. Furthermore, the prepaid card indicates the data of lately renewed balance visually and in time series so that the system enables the customer to make sure the details.

## Claims

1. A system for issuing and accounting prepaid cards comprising:
a central unit having accessible data base in which personal account data are accumulated;
card-issuing means having a terminal connected to said data base through a communication circuit and for issuing said prepaid card with values with which goods and services can be purchased up to maximum allowable sum based on said personal account data accessed via said terminal; and
accounting means for renewing said maximum allowable sum based upon the differences between sums of goods and services really purchased and said maximum allowable sum of said prepaid card and for recording renewed maximum allowable sum in said prepaid card.

2. A system according to claim 1; wherein said prepaid card comprises a base sheet and a thermosensible layer.

3. A system according to claim 2; wherein said card-issuing means includes a thermal printing unit for recording data of an issue date and an initial maximum allowable sum in said prepaid card.

4. A system according to claim 3; wherein said accounting means includes an optical sensor for reading said maximum allowable sum printed on said prepaid card and a thermal printing unit for recording said renewed maximum allowable sun in said prepaid card.

5. A system according to claim 1; wherein said card-issuing means includes recording means for recording marks in said prepaid card to identifing a nominal person of said personal account data accessed.

6. A system according to claim 5; wherein said mark comprises an image of face of said nominal person.

7. A system according to claim 1; wherein said card-issuing means includes cash card processing means for inputting data of deposited cash card, for accessing said personal account data based on said data of deposited cash card, for inputting a private identification number assigned to customer and for checking said private identification number with said personal account data.

8. A system according to claim 1; wherein said accounting means includes inputting means for inputting purchase price.

9. A system according to claim 1; wherein said accounting means connects to said central unit through a communication circuit, whereby said system effects a settlement related to said sums of goods and services purchased on-line.

# FIG. 1(A)

# FIG. 1(B)

# FIG. 2(A)

# FIG. 2(B)

# FIG. 3

# FIG. 4(A)

FIG. 4(B)

# FIG. 5(A)

```
        ( START )


      ┌──────────────────┐
      │  INITIALIZATION  │
      └──────────────────┘

101          ◇ ACCESS          N
            TO DATA
            BASE
             │ Y

102   ┌──────────────────┐
      │ INPUT THE PERSONAL│
      │ IDENTIFICATION    │
      │ CODE              │
      └──────────────────┘

103   ┌──────────────────┐
      │  COLLATE CODES   │
      └──────────────────┘

                                          106
104      ◇ COLLATION      N          ◇ INPUT          Y
           FITS ?                   CYCLE TIME > K
            │ Y

105   ┌──────────────────┐
      │  INPUT THE       │
      │  ISSUED SUM      │
      └──────────────────┘

106   ┌──────────────────┐
      │  CONFIRM THE     │
      │  BALANCE OF      │
      │  DEPOSIT         │
      └──────────────────┘
                                          108          Y
107      ◇ BALANCE >      N          ◇ CORRECT          N
          INPUT SUM                  THE INPUT SUM
            │ Y

109   ┌──────────────────┐
      │  NOTICE OF ISSUE │
      └──────────────────┘

110   ┌──────────────────┐
      │  ISSUE THE       │
      │  PREPAID CARD    │
      └──────────────────┘
```

# FIG. 5(B)

```
                    ┌─────────────┐
                    │    START    │
                    └──────┬──────┘
                           │
                    ┌──────▼──────────┐
                    │ INITIALIZATION  │
                    └──────┬──────────┘
                           │
                        ╱──▼──╲
              ╱─────────       ─────────╲    CASH CARD
   151  ─────┤   CASH CARD OR PREPAID    ├──────────────▶ STEP 101
              ╲─────────       ─────────╱
                        ╲─────╱  CARD ?
                           │
                           │ PREPAID CARD
                           │
                        ╱──▼──╲            N
             ╱──────────       ──────────╲
   152  ────┤     RE-ISSUE CARD ?         ├──────────┐
             ╲──────────       ──────────╱           │
                        ╲─────╱                      │
                           │ Y                       │
                    ┌──────▼──────────┐              │
   153  ────────────│   INVALIDATE    │              │
                    │   THE OLD CARD  │              │
                    └──────┬──────────┘              │
                           │                         │
                    ┌──────▼──────────┐              │
   154  ────────────│    TRANSFER     │              │
                    │   THE BALANCE   │              │
                    └──────┬──────────┘              │
                           ◀─────────────────────────┘
                           │
                    ┌──────▼──────────┐
   155  ────────────│    RELEASE      │
                    │   THE NEW CARD  │
                    └─────────────────┘
```

# FIG. 6

# FIG. 7(A)

# FIG. 7(B)

74 — COMMUNICATION CIRCUIT → CENTRAL UNIT / CARD-ISSUING UNIT

76 DISPLAY UNIT

70 — PREPAID CARD DETECTING UNIT

71 — PREPAID CARD READING UNIT

75 PREPAID CARD PROCESSING UNIT

77 PREPAID CARD CARRIER PROCESSING CONTROL UNIT

78 PREPAID CARD CARRYING UNIT

79 PREPAID CARD PRINTING UNIT

72 — INPUT OPERATING UNIT

80 — CASH REGISTER

73 SECURITY CIRCUIT

EP 0 406 841 A1

# FIG. 8

```
        ( START )
            |
   ┌─────────────────┐
   │ INITIALIZATION  │
   └─────────────────┘
            |
  201      / \
        /     \      N
      < INSERT   >─────┐
        \THE CARD?/    |
         \     /       |
           | Y         |
  202     / \          |
    N   /     \        |
  ┌────< TRUE CARD? >  |
  |     \     /        |
  |       | Y          |
  |  ┌──────────────┐  |
  203│ DISPLAY THE  │  |
  |  │  BALANCE     │  |
  |  └──────────────┘  |
  |       |            |
  |  ┌──────────────┐  |
  204│ INPUT THE SUM │  |
  |  │ OF PAYMENT   │  |
  |  └──────────────┘  |
  |       |            |
  205    / \       208 / \
       /     \  Y    /     \   Y
      < BALANCE< >──< SELECT  >──┐
       \ PAID /      \THE MODE/  |
       \ SUM /        \OF     /  |
         | N          \PAYMENT/  |
         |              | N      |
         |       ┌──────────────┐|
         |       │ CASH PAYMENT ││
         |       └──────────────┘|
         |←─────────────┘        |
  ┌──────────────────┐           |
  206│ NOTICE OF PAYMENT │       |
  └──────────────────┘           |
         |                       |
  ┌──────────────────┐           |
  207│ PRINT THE RENEWED│        |
   │  BALANCE         │          |
  └──────────────────┘           |
         |                       |
  ┌──────────────────┐           |
   │ RELEASE THE CARD │          |
  └──────────────────┘           |
```

## DOCUMENTS CONSIDERED TO BE RELEVANT

EP 90112789.4

| Category | Citation of document with indication, where appropriate, of relevant passages | Relevant to claim | CLASSIFICATION OF THE APPLICATION (Int. Cl.5) |
|---|---|---|---|
| X | US - A - 4 795 892 (GILMORE et al.) * Totality * | 1,5,7, 8 | G 07 F 7/08 |
| A | US - A - 4 629 874 (PUGSLEY et al.) * Totality * | 1 | |

TECHNICAL FIELDS SEARCHED (Int. Cl.5)

G 06 F 7/00
G 06 K 5/00
G 07 F 7/00

The present search report has been drawn up for all claims

| Place of search | Date of completion of the search | Examiner |
|---|---|---|
| VIENNA | 05-10-1990 | BEHMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)